# EUROPÄISCHE PATENTSCHRIFT

(11) **EP 4 051 524 B1**
(45) Veröffentlichungstag und Bekanntmachung des Hinweises auf die Patenterteilung: **11.06.2025**
(21) Anmeldenummer: 20799639.8
(22) Anmeldetag: 22.10.2020
(51) Int. Cl.: B60K 35/10, B60K 35/22, B60K 35/28, B60K 35/29, B60K 35/00

(54) **ANZEIGEVORRICHTUNG MIT EINER TRANSPARENTEN PIXELMATRIX ZUM ANZEIGEN VON AUSWÄHLBAREN GRAPHISCHEN OBJEKTEN SOWIE KRAFTFAHRZEUG UND BETRIEBSVERFAHREN FÜR DIE ANZEIGEVORRICHTUNG**
DISPLAY DEVICE COMPRISING A TRANSPARENT PIXEL MATRIX FOR DISPLAYING SELECTABLE GRAPHIC OBJECTS, AND MOTOR VEHICLE AND METHOD OF OPERATING THE DISPLAY DEVICE
DISPOSITIF D'AFFICHAGE COMPRENANT UNE MATRICE TRANSPARENTE DE PIXELS POUR L'AFFICHAGE D'OBJETS GRAPHIQUES SÉLECTIONNABLES, ET VÉHICULE AUTOMOBILE ET PROCÉDÉ DE FONCTIONNEMENT DU DISPOSITIF D'AFFICHAGE

(30) Priorität: 28.10.2019 DE 102019129027; 06.10.2020 DE 102020126083
(43) Veröffentlichungstag der Anmeldung: 07.09.2022
(73) Patentinhaber: Audi AG, 85045 Ingolstadt (DE)
(72) Erfinder: HELOT, Jacques, 85051 Ingolstadt (DE); MÜLLER, Ulrich, 85055 Ingolstadt (DE); KÖBERLE, Carolin, 85057 Ingolstadt (DE); GRANITZA, Jens, 85049 Ingolstadt (DE)
(74) Vertreter: Hofstetter, Schurack & Partner
(86) Internationale Anmeldenummer: PCT/EP2020/079694
(87) Internationale Veröffentlichungsnummer: WO 2021/083775

(56) Entgegenhaltungen:
- DE-A1- 102010 055 144
- DE-A1- 102014 108 656
- DE-A1- 102017 212 912
- DE-B4- 102014 108 656

## Beschreibung

Die Erfindung betrifft eine Anzeigevorrichtung mit einer Pixelmatrix, die ein Benutzer von einem vorbestimmten Hauptbetrachtungspunkt aus betrachten kann (beispielsweise in einem Kraftfahrzeug vom Fahrersitz aus). Die Pixelmatrix ist transparent ausgestaltet und auf ihr kann durch eine Steuerschaltung zumindest ein graphisches Objekt, wie z.B. ein Symbol oder Menüelement, dargestellt oder angezeigt werden, welches der Benutzer mittels einer Benutzereingabe auswählen kann. Zu der Erfindung gehören auch ein Kraftfahrzeug mit einer solchen Anzeigevorrichtung sowie ein Verfahren zum Betreiben der Anzeigevorrichtung.

Eine transparente Pixelmatrix ist aus der DE 10 2014 108 656 A1 bekannt, wo beschrieben ist, dass eine solche Pixelmatrix auf Basis der TOLED-Technologie (TOLED - transparent organic light emitting diode) oder einer transparenten LCD-Anzeige (LCD - Flüssigkristallanzeige) basieren kann. Die Erkennbarkeit von graphischen Objekten, die auf einer solchen transparenten Pixelmatrix angeordnet sind, hängt von der Leuchtintensität des Hintergrundes ab, den man durch die transparent Pixelmatrix hindurch sehen kann.

In Bezug auf eine nicht-transparente Pixelmatrix ist aus der DE 10 2010 010 575 A1 bekannt, dass man (vom Hauptbetrachtungspunkt des Benutzer aus gesehen) vor dieser Pixelmatrix eine transparente Schicht anordnen kann, auf der ein opaker Lack angeordnet sein kann, um Teile der Pixelmatrix zu verdecken. Dies resultiert aber in einer dauerhaften Verdeckung.

Aus der DE 10 2010 055 144 A1 ist bekannt, dass vor einer nichttransparenten Pixelmatrix eine schaltbare Abschirmschicht angeordnet sein kann, die zwischen einem transparenten und einem opaken Zustand umgeschaltet werden kann. Hierbei kann die schaltbare Abschirmschicht in mehrere Segmente eingeteilt sein, sodass vom Hauptbetrachtungspunkt des Benutzers aus gesehen Teile der Pixelmatrix abwechselnd verdeckt und sichtbar geschaltet werden können. Eine Verbesserung des Anzeigekontrastes für eine transparente Pixelmatrix vor einem hell erleuchteten Hintergrund ergibt sich dadurch nicht.

Die DE 10 2017 212 912 A1 stellt weiteren Stand der Technik dar.

Der Erfindung liegt die Aufgabe zugrunde, eine Anzeigevorrichtung mit transparenter Pixelmatrix bereitzustellen, mittels welcher ein Benutzer auf ein graphisches Objekt, das auf der Pixelmatrix dargestellt wird, aufmerksam gemacht werden kann, selbst wenn durch die transparente Pixelmatrix hindurch ein heller und/oder vielfarbiger Hintergrund sichtbar ist.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist eine Anzeigevorrichtung mit einer Pixelmatrix bereitgestellt. Die Erfindung geht davon aus, dass die Pixelmatrix von einem Hauptbetrachtungspunkt aus entlang einer vorbestimmen Hauptbetrachtungsrichtung durch einen Benutzer betrachtet oder gesehen werden kann. Der Benutzer kann also von einem Hauptbetrachtungspunkt aus auf die Pixelmatrix schauen, wodurch sich die beschriebene Hauptbetrachtungsrichtung hin zur Pixelmatrix ergibt. Ein solcher Hauptbetrachtungspunkt kann die für die Benutzung der Anzeigevorrichtung vorgesehene Kopfposition sein. Die Hauptbetrachtungsrichtung kann beispielsweise senkrecht auf eine Oberfläche der Pixelmatrix ausgerichtet sein. Es handelt sich z.B. um den Vektor, der vom Hauptbetrachtungspunkt (Kopfposition) aus zu der Pixelmatrix weist.

Die Pixelmatrix ist transparent ausgestaltet. Sie kann beispielsweise auf der beschriebenen TOLED-Technologie oder sogenannten transparenten Mikro-LEDs (LED - Leuchtdiode) basieren. Ein Benutzer kann also entlang der Hauptbetrachtungsrichtung auf die Pixelmatrix blicken und sieht dann hinter der Pixelmatrix den dort angeordneten Hintergrund. Ist die Anzeigevorrichtung beispielsweise in einem Kraftfahrzeug vor einer Fensterscheibe desselben angeordnet, so kann der Benutzer durch die Pixelmatrix und die Fensterscheibe hindurch die Umgebung des Kraftfahrzeugs betrachten. Die Pixelmatrix kann auch vor einem Verkleidungsteil angeordnet sein, beispielsweise einem Holzfurnier, sodass die Holzmaserung als Hintergrund sichtbar ist.

Eine Steuerschaltung der Anzeigevorrichtung ist dazu eingerichtet, mittels der Pixelmatrix zumindest ein graphisches Objekt anzuzeigen, also z.B. zumindest ein Icon. Die Pixelmatrix kann hierzu selbstleuchtende Pixel aufweisen, die durch die Steuerschaltung angesteuert oder aktiviert werden können. Ein graphisches Objekt kann beispielsweise durch Pixeldaten beschrieben sein, die für einzelne Pixel des Objekts jeweils die Leuchtfarbe und/oder Leuchthelligkeit angeben. Ein Benutzer kann dann vom Hauptbetrachtungspunkt aus entlang der Hauptbetrachtungsrichtung blickend auf der Pixelmatrix das zumindest eine angezeigte graphische Objekt sehen oder betrachten. Da die Pixelmatrix transparent ist, kann auch Licht aus einem Bereich hinter der Pixelmatrix durch diese hindurch zum Auge des Benutzer gelangen.

Vom Hauptbetrachtungspunkt aus entlang der Hauptbetrachtungsrichtung gesehen ist daher hinter der Pixelmatrix eine Abschirmschicht mit individuell schaltbaren Segmenten angeordnet. Der Benutzer kann also von dem besagten Hauptbetrachtungspunkt aus durch die Pixelmatrix hindurch blicken und kann dahinter die Abschirmschicht sehen. Die Segmente der Abschirmschicht sind jeweils in Bezug auf ihre Transparenz zwischen einem Minimalwert (minimale Transparenz, maximale Opazität), einem Maximalwert (maximale Transparenz, minimale Opazität) und zumindest einem Zwischenwert (zwischen Minimalwert und Maximalwert) umschaltbar ausgestaltet. Ein schaltbares Segment kann beispielsweise auf der Grundlage eines SPD (suspended particle device) und/oder eines PDLC (polymer-dispersed liquidcrystal) und/oder einer elektrochromatischen Schicht und/oder mittels Mikrolamellen realisiert werden. Der Minimalwert kann z.B. in einem Bereich von 0 Prozent bis 10 Prozent Transparenz (100 Prozent bis 90 Prozent Opazität), der Maximalwert kann in einem Bereich von 50 Prozent bis 100 Prozent (50 Prozent bis 0 Prozent Opazität) liegen. Der jeweilige Wert kann technisch bedingt sein. Das Einstellen eines möglichen Zwischenwerts kann durch Einstellen einer Frequenz einer Wechselspannung und/oder einer Amplitude/eines Betrags einer elektrischen Spannung erfolgen.

Die Steuerschaltung ist dazu eingerichtet, ein angezeigtes graphisches Objekt in Abhängigkeit von einer Benutzereingabe des Benutzers auszuwählen. Der Benutzer kann also mittels seine Benutzereingabe einer Auswahl tätigen, durch welche ein angezeigtes graphisches Objekt als aktuell ausgewählt festgelegt wird. Das zumindest eine graphische Objekt kann beispielsweise Bestandteil eines Bedienmenüs und das ausgewählte Objekt ein Menüelement sein, welches aktiviert oder ausgeführt werden soll, wenn der Benutzer beispielsweise eine Bestätigung der Auswahl signalisiert.

Da das zumindest eine graphische Objekt auf einer transparenten Pixelmatrix angezeigt ist, muss nun dem Benutzer vor dem durch die Pixelmatrix hindurch sichtbaren Hintergrund visualisiert oder signalisiert werden, welches graphische Objekt aktuell ausgewählt ist. Oftmals ist es hierbei schwierig, ausgewählte graphische Objekt einfach heller als jedes übrige graphische Objekt darzustellen, da ohnehin jedes graphische Objekt mit maximaler Helligkeit angezeigt wird, um es in Bezug auf den Darstellungskontrast vom Hintergrund optisch oder visuell abzuheben. Es kann ein Rahmen um das aktuell ausgewählte Objekt angezeigt werden.

Die schaltbaren Segmente können die Auswahlanzeige weiter unterstützen. Die Steuerschaltung ist deshalb dazu eingerichtet, zum Signalisieren, welches Objekt (23) aktuell ausgewählt ist, dazu entlang der Hauptbetrachtungsrichtung gesehen zumindest jedes hinter dem ausgewählten Objekt angeordnete Segment der Abschirmschicht als jeweiliges Auswahlsegment mit dem Minimalwert oder dem Maximalwert der Transparenz und zumindest eines der Segmente als Hintergrundsegment komplementär dazu mit dem Maximalwert oder dem Minimalwert der Transparenz zu betreiben. Es kann nur jedes Segment, das sich hinter dem ausgewählten Objekt befindet, in der besagten Weise geschaltet werden, oder z.B. zusätzlich ein Rahmenbereich um das ausgewählte Objekt, um den Kontrast noch zu vergrößern. Dazu zumindest eine Auswahlsegment ist somit mit dem ausgewählten Objekt deckungsgleich angeordnet und opak geschaltet. Somit wird hinter dem aktuell ausgewählten Objekt Licht aus dem Hintergrund durch das zumindest eine Auswahlsegment abgeschirmt oder blockiert, während der Hintergrund durch das zumindest eine Hintergrundsegment weiter sichtbar bleibt. Alternativ dazu kann hinter dem aktuell ausgewählten Objekt jedes dort befindliche Segment der Abschirmschicht transparent geschaltet sein und zumindest eines der übrigen Segmente kann opak geschaltet sein.

Aus Sicht des Benutzers wird also dasjenige Segment oder (bei kleinen Segmenten) werden mehrere Segmente, die sich alle hinter dem ausgewählten Objekt befinden, minimal transparent / maximal opak geschaltet. Somit ist der Einfluss der Hintergrundbeleuchtung minimiert. Zumindest ein umgebendes Segment wird aber weiterhin als Hintergrundsegment mit maximaler Transparenz oder minimaler Opazität betrieben. Somit wird also der Blick durch die Pixelmatrix hindurch nur minimal eingeschränkt. Auch die komplementäre Schaltung der Segmente kann vorgesehen sein.

Der Benutzer sieht somit in vorteilhafter Weise, welches Objekt als nächstes in die Auswahl kommen kann.

Zu der Erfindung gehören auch Weiterbildungen, durch die sich zusätzliche Vorteile ergeben.

Es hat sich erwiesen, dass die Fläche des graphischen Objekts in der Regel derart klein ist, dass durch Opak-Schalten jedes Segments hinter dem ausgewählten Objekt nur einen sehr kleiner Blickwinkel des Benutzers opak geschaltet wird (möglicherweise weniger als 1 Grad Sichtwinkel), weshalb das ausgewählte graphische Objekt mit dem dahinter liegenden, opak geschalten Auswahlsegment (oder den mehreren Auswahlsegmenten) dennoch übersehen werden kann. Um dies zu vermeiden, ist erfindungsgemäß vorgesehen, dass zwischen dem zumindest einen Auswahlsegment (opak geschaltet) und dem zumindest einen Hintergrundsegment (maximaltransparent geschaltet) zumindest ein Segment als Zwischensegment bereitgestellt wird, das jeweils mit einem Zwischenwert der Transparenz betrieben wird. das ausgewählte Objekt wird also zu zumindest einer Seiter hin oder zu mehreren oder allen Seiten hin durch ein teiltransparentes Zwischensegment flankiert oder umrahmt. Um das zumindest einen Auswahlsegment hinter dem ausgewählten Objekt wird also zumindest ein Zwischensegment bereitgestellt, welches einen Rahmen oder Puffer zwischen dem Auswahlsegment (ausgewählte Objekt) und dem zumindest einen Hintergrundsegment (durch welches hindurch der Hintergrund erkennbar ist) angeordnet ist. Jedes Zwischensegment weist hierbei in Bezug auf die Transparenz einen Zwischenwert zwischen dem Minimalwert und dem Maximalwert auf.

Somit ergibt sich also bei einer Anordnung der Objekte in einer Reihe, folgende Reihenanordnung der Segmente: zumindest ein Hintergrundsegment, zumindest ein Zwischensegment, zumindest ein Auswahlsegment (hinter dem ausgewählten Objekt) , zumindest ein Zwischensegment, zumindest ein Hintergrundsegment. Somit ergibt sich also ein örtliches Ausblenden oder Einblenden des ausgewählten Objekts durch zumindest ein teiltransparentes Zwischensegment, welches rechts und/oder links und/oder oberhalb und/oder unterhalb des ausgewählten Objekts durch die transparente Pixelmatrix hindurch sichtbar ist.

Es ergibt sich der Vorteil, dass um das ausgewählte Objekt herum eine nur teilweise transparente Abschirmschicht bereitgestellt wird, indem zumindest ein Zwischensegment mit einem Zwischenwert der Transparenz eingestellt wird. Erst darüber hinaus wird jedes weitere verbleibende Segment der Abschirmschicht als Hintergrundsegment mit dem Maximalwert der Transparenz weiter betrieben. Somit wird der Blick des Benutzers auf ein größeres Feld oder einen größeren Bereich der verringerten Transparenz gelenkt, ohne dass hierbei eine Mehrdeutigkeit dahingehend entsteht, welches Objekt denn das ausgewählte ist. Denn lediglich die Auswahlsegmente oder das einzelne Auswahlsegment hinter dem eigentlich ausgewählten Objekt weist den Minimalwert der Transparenz auf. Nur hinter dem eigentlichen ausgewählten Objekt ist also die Abschirmschicht vollständig opak geschaltet.

Die Benutzereingabe zum Auswählen eines angezeigten Objekts kann beispielsweise als Geste und/oder anhand einer Blickrichtung des Benutzers und/oder durch einen Drehsteller und/oder eine Taste und/oder auf der Anzeigefläche der Anzeigevorrichtung erfasst werden. Letzteres ist möglich, falls die Anzeigevorrichtung als Touchscreen ausgestaltet ist. Das jeweils aktuell ausgewählte Objekt wird dann aufgrund des opak geschaltete (minimale Transparenz) Auswahlsegments oder der mehreren opak geschalteten Auswahlsegmente hinter dem ausgewählten Objekt mit maximalem Kontrast dargestellt, da der Anteil an Hintergrundlicht im Bereich des ausgewählten Objekts minimiert ist. Umrahmt oder flankiert ist das ausgewählte graphische Objekt von zumindest einem Zwischensegment mit dem jeweiligen Zwischenwert der Transparenz. Der Rest der Pixelmatrix wird durch die Hintergrundsegmente hindurch mit maximaler Transparenz dargestellt.

Als graphische Objekte kann jeweils in der beschriebenen Weise ein Menüelement eines Auswahlmenüs und/oder ein Icon und/oder eine graphische Repräsentation von Mediendaten (beispielsweise MP3 oder Datenstrom für Video und/oder Audio) dargestellt werden. Ist ein Objekt ausgewählt und möchte der Benutzer das ausgewählte Objekt aktivieren oder starten, so kann durch die Steuerschaltung beispielsweise die Aktivierung des ausgewählten Objekts beispielsweise anhand von einem Signalwort (Spracherkennung) und/oder mittels eines Touchscreens (die Pixelmatrix weist dann zusätzlich eine Touchfolie auf) und/oder anhand einer Gestenerkennung (beispielsweise kamerabasiert) und/oder anhand einer Tastenbetätigung erfolgen.

In einer Ausführungsform entsprechen der Minimalwert, der zumindest eine Zwischenwert und der Maximalwert der Transparenz einer zunehmenden Transparenz. Ausgehend von dem zumindest einen, hinter dem ausgewählten Objekt angeordneten Auswahlsegment (Minimalwert) nimmt dabei die Transparenz der Segmente in zumindest zwei Stufen zu. Es erfolgt also ausgehend von dem ausgewählten Objekt mittels der Segmente der Abschirmschicht ein Ausblenden in zumindest zwei Stufen, wobei das Ausblenden durch Einstellen der Transparenz erfolgen. Bevorzugt sind drei Stufen (z.B. 0%, 20%, 40% und maximale Transparenz) oder mehr als drei Stufen vorgesehen. Dadurch ergibt sich der Vorteil, dass der Gradient der Transparenz der Abschirmschicht (d.h. der Richtungsvektor der Transparenzveränderung) die Lage des ausgewählten Objekts auf der Pixelmatrix signalisiert. Hierdurch muss kein zusätzliches graphisches Objekt, beispielsweise ein Pfeil, auf der Pixelmatrix selbst dargestellt werden. Das spart Aufwand beim Erstellen des GUI (Graphical User Interface - Graphische Benutzerschnittstelle).

In einer Ausführungsform ist die Steuerschaltung dazu eingerichtet, mehrere Zwischensegmente mit unterschiedlichen Transparenzwerten zu betreiben. Hierdurch ergeben sich die besagten mehr als zwei Stufen beim Übergang vom Auswahlsegment hinter dem ausgewählten Objekt und den Hintergrundsegmenten. Damit ist ein Übergang des Überblendeffekts feiner.

In einer Ausführungsform ist die Steuerschaltung dazu eingerichtet, jedes der Segmente als Hintergrundsegment zu betreiben, also die gesamte Abschirmschicht bei maximaler Transparenz zu betreiben, falls ein ausgewähltes graphisches Objekt fehlt. Findet also gerade keine Auswahl statt, so bietet die Abschirmschicht der Anzeigevorrichtung den geringsten optischen Einfluss oder die geringste optische Hinderlichkeit für den Benutzer. Damit kann der Benutzer durch die Pixelmatrix und die Abschirmschicht hindurch den Hintergrund betrachten.

In einer Ausführungsform ist die Steuerschaltung dazu eingerichtet, mehrere graphische Objekte anzuzeigen, sodass der Benutzer also während der Benutzereingabe zwischen den Objekten wechseln kann, sodass während der Benutzereingabe das ausgewählte Objekt wechselt. Die Steuerschaltung ist nun dazu eingerichtet, bei einem Wechsel des ausgewählten Objekts auf der Pixelmatrix die Objekte ortsfest anzuzeigen, also bei Wechsel des ausgewählten Objekts dennoch jedes Objekt an seinem Platz zu behalten, und stattdessen die Transparenz der Segmente der Abschirmschicht in Abhängigkeit von einer aktuellen Position des aktuell ausgewählten Objekts einzustellen. Wird also die Auswahl von einem der Objekte zu einem anderen der Objekte gewechselt, so wird hinter dem alten, zuvor ausgewählten Objekt das zumindest eine Segment von dem Minimalwert der Transparenz weggeschaltet (die Transparenz erhöht) und hinter dem neu ausgewählten Objekt das zumindest eine Segment als Auswahlsegment (minimale Transparenz) betrieben. Entsprechend werden auch die übrigen Segmente gemäß ihrer Relativlage zum aktuell ausgewählten Objekt als Zwischensegment oder Hintergrundsegment betrieben. Hierdurch ergibt sich der Vorteil, dass sich die Position der Objekte auf der Pixelmatrix bei einem Wechsel der Auswahl nicht ändern muss, was eine erneute visuelle Suche des Benutzers vermeidet.

In einer Ausführungsform ist die Steuerschaltung dazu eingerichtet, mehrere graphische Objekte anzuzeigen und während der Benutzereingabe das ausgewählte Objekt zu wechseln und dabei nun im Unterschied das zumindest eine Auswahlsegment, das zumindest eine Zwischensegment und das zumindest eine Hintergrundsegment örtlich unverändert zu betreiben und stattdessen auf der Pixelmatrix das jeweils aktuell ausgewählte Objekt vor dem zumindest einen Auswahlsegment anzuzeigen. Durch Wechsel der Auswahl wird also die Position der Objekte verändert, sodass das aktuell ausgewählte Objekt vor dem zumindest einen Auswahlsegment angezeigt oder dargestellt wird. Die Objekte können hierzu beim Wechsel der Auswahl animiert verschoben werden. Hierdurch ergibt sich der Vorteil, dass das zumindest eine Auswahlsegment mit dem davor sichtbaren ausgewählten Objekt beispielsweise stets an derselben Stelle oder in demselben Bereich, beispielsweise in der Mitte der Pixelmatrix, angezeigt werden kann.

In einer Ausführungsform entspricht eine jeweilige Flächengröße der Segmente jeweils einer Gesamtfläche eines einzelnen oder mehrerer Pixel der Pixelmatrix, insbesondere ist pro Objekt nur ein Segment vorgesehen. Mit anderen Worten ist jedes Segment der Abschirmschicht größer als ein Pixel der Pixelmatrix. Somit kann durch Schalten eines einzelnen Segments die Transparenz für mehrere Pixel auf einmal festgelegt werden. Falls pro Pixel ein eigenes, zugeordnetes Segment vorgesehen ist, kann die Abschirmung der Abschirmschicht pixelgenau an die Form des Objekts angepasst werden.

In einer Ausführungsform sind die Segmente zu einem jeweiligen Zeitpunkt monochrom. Mit anderen Worten bietet jedes Segment einen farblich einfachen, monochromen Hintergrund für die davor angeordneten Pixel der Pixelmatrix. Hierdurch wird die Erkennbarkeit der graphischen Objekte durch die Segmente sichergestellt.

Die Anzeigevorrichtung hat sich insbesondere im Einsatz in einem Kraftfahrzeug bewährt. Die Erfindung sieht entsprechend ein Kraftfahrzeug mit einer Ausführungsform der erfindungsgemäßen Anzeigevorrichtung vor, wobei entlang einer sich durch die Anzeigevorrichtung ergebenden Hauptbetrachtungsrichtung, entlang welcher ein Benutzer im Kraftfahrzeug die Anzeigevorrichtung betrachten kann, hinter der Anzeigevorrichtung ein Freiraum bereitgestellt ist. Ist die Abschirmschicht transparent geschaltet, so kann der Benutzer also durch die transparente Pixelmatrix hindurch den Freiraum erkennen. Somit ergibt sich trotz Bereitstellen einer Anzeigevorrichtung im Kraftfahrzeug keine Einschränkung des Raumgefühls, wenn die Pixelmatrix und die Abschirmschicht transparent geschaltet sind.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch ein Verfahren zum Betreiben der Anzeigevorrichtung, wobei eine Steuerschaltung mittels einer transparenten Pixelmatrix zumindest ein graphisches Objekt in der beschriebenen Weise anzeigt, und entlang der Hauptbetrachtungsrichtung gesehen hinter der Pixelmatrix eine Abschirmschicht mit individuell schaltbaren Segmenten betrieben wird. Die Steuerschaltung kann hierzu auf der Grundlage zumindest eines Mikroprozessors und/oder zumindest eines Mikrocontrollers realisiert oder bereitgestellt sein. Die Pixelmatrix kann durch die Steuerschaltung angesteuert werden, um die jeweilige Leuchthelligkeit und/oder Leuchtfarbe einzelner Pixel der Pixelmatrix beispielsweise in Abhängigkeit von Pixeldaten oder Grafikdaten des zumindest einen Objekts anzusteuern oder festzulegen. Die Abschirmschicht kann in der beschriebenen Weise aus Segmenten realisiert sein, die auf einer der besagten Technologien basieren kann. die Segmente sind dabei derart ausgestaltet, dass sie in Bezug auf ihre Transparenz zwischen einem Minimalwert, einem Maximalwert und zumindest einem Zwischenwert umschaltbar ausgestaltet sind. Es lassen sich also mindestens drei Grade der Transparenz und damit auch mindestens drei Grade der Opazität einstellen. Dies ist mit den besagten Technologien möglich. Die Steuerschaltung wählt in Abhängigkeit von einer Benutzereingabe eines Benutzers ein angezeigtes graphisches Objekt aus und signalisiert dies dem Benutzer, indem entlang der Hauptbetrachtungsrichtung gesehen jedes hinter dem ausgewählten Objekt angeordnete Segment als jeweiliges Auswahlsegment mit dem Minimalwert der Transparenz und zumindest eines der Segmente als Hintergrundsegment mit dem Maximalwert der Transparenz und für einen gestuften Übergang der Transparenz zumindest ein zwischen dem zumindest einen Auswahlsegment und dem zumindest einen Hintergrundsegment angeordnetes Segment der Abschirmschicht als Zwischensegment jeweils mit einem aus dem zumindest einen Zwischenwert betreibt wird.

Die Erfindung umfasst auch Weiterbildungen des erfindungsgemäßen Verfahrens, wie sie in Zusammenhang mit den Weiterbildung der erfindungsgemäßen Anzeigevorrichtung bereits beschrieben wurden. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs mit einer Explosionszeichnung einer Anzeigevorrichtung;
- Fig. 2: ein Anzeigeeinhalt einer Anzeigevorrichtung des Kraftfahrzeugs während eines Wechsels einer Auswahl eines graphischen Objekts, wobei das graphische Objekt hierbei verschoben wird;
- Fig. 3: eine schematische Darstellung eines Anzeigeinhalts der Anzeigevorrichtung während des Wechsels der Auswahl eines Objekts, wobei das Objekt ortsfest dargestellt wird;
- Fig. 4: eine schematische Darstellung eines Anzeigeinhalts der Anzeigevorrichtung bei einer Ausführungsform, bei welcher ein Hintergrund des ausgewählten Objekts transparent geschaltet wird; und
- Fig. 5: eine schematische Darstellung eines Anzeigeinhalts der Anzeigevorrichtung bei einer Ausführungsform, bei welcher auf Zwischenwerte für die Transparenz verzichtet wird.

In den Figuren bezeichnen gleiche Bezugszeichen jeweils funktionsgleiche Elemente.

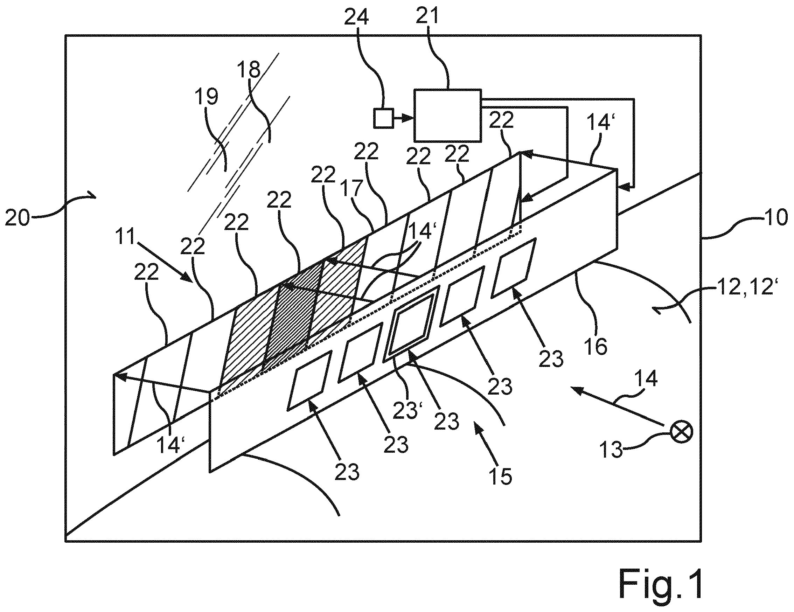

Fig. 1 zeigt ein Kraftfahrzeug 10, bei dem es sich um einen Kraftwagen, insbesondere einen Personenkraftwagen oder Lastkraftwagen, handeln kann. In dem Kraftfahrzeug 10 kann eine Anzeigevorrichtung 11 bereitgestellt sein, die beispielsweise auf einem Armaturenbrett 12 angeordnet sein kann. Ein Benutzer (nicht dargestellt) kann von einem Hauptbetrachtungspunkt 13 aus auf die Anzeigevorrichtung 11 entlang einer Hauptbetrachtungsrichtung 14 blicken. Der Hauptbetrachtungspunkt 13 kann beispielsweise an einer Kopfstütze eines Fahrzeugsitzes, beispielsweise des Fahrersitzes, angeordnet sein. Der Benutzer kann entlang der Hauptbetrachtungsrichtung 14 auf die Anzeigevorrichtung 11 schauen und einen dort dargestellten Anzeigeinhalt 15 sehen. Der Anzeigeinhalt 15 kann zum einen mittels einer Pixelmatrix 16 und zum anderen mittels einer Abschirmschicht 17 erzeugt sein. Der dargestellte Abstand zwischen der Pixelmatrix 16 und der Abschirmschicht 17 ist nur aufgrund der Darstellung als Explosionszeichnung vorhanden, die Pixelmatrix 16 und die Abschirmschicht 17 können aneinander berühren, beispielsweise zusammengeklebt sein. Die Anzeigevorrichtung 11 kann freistehend auf dem Armaturenbrett 12 angeordnet sein, sodass sich hinter der Anzeigevorrichtung 11 ein Freiraum 18 ergibt. Dargestellt ist, wie vom Hauptbetrachtungsrichtung 14 aus hinter der Anzeigevorrichtung 11 als Freiraum 18 eine Umgebung 19 vorgesehen sein kann, die durch eine Fensterscheibe 20, beispielsweise die Frontscheibe oder Windschutzscheibe, hindurch gesehen werden kann.

Die Pixelmatrix 16 kann als transparente Pixelmatrix, beispielsweise auf der TOLED-Technologie, realisiert sein. Die Pixelmatrix 16 kann durch eine Steuerschaltung 21 der Anzeigevorrichtung 11 gesteuert sein. Die Abschirmschicht 17 kann einzelne schaltbare Segmente 22 aufweisen, die jeweils in Bezug auf ihre Transparenz durch die Steuerschaltung 21 geschaltet werden können.

Um die räumliche relative Anordnung des Hauptbetrachtungspunkts 13, der Pixelmatrix 16 und der Abschirmschicht 17 zu veranschaulichen, ist der Vektor der Hauptbetrachtungsrichtung 14 noch einmal wiederholt als Hauptbetrachtungsvektor 14' dargestellt, wobei es sich hierbei um parallel zur Hauptbetrachtungsrichtung 14 angeordnete Vektoren handelt.

Somit ist erkennbar, dass die einzelnen Segmente 22 der Abschirmschicht 17 entlang der Hauptbetrachtungsrichtung 14 betrachtet hinter der Pixelmatrix 16 angeordnet sind.

Die Steuerschaltung 21 kann auf der Pixelmatrix 16 graphische Objekte 23 anzeigen, beispielsweise einzelne Menüelemente eines Auswahlmenüs oder graphische Symbole für einzelne Medieninhalte, beispielsweise einzelne Lieder.

Der Benutzer kann zwischen den Objekten 23 auswählen. Hierzu kann in an sich bekannter Weise beispielsweise eine Gestensteuerung und/oder ein Drehsteller und/oder zumindest eine Auswahltaste bereitgestellt sein, um nur Beispiele für mögliche Benutzereingaben 24 für die Auswahl eines der Objekte 23 zu nennen.

Die Steuerschaltung 21 kann in Abhängigkeit von der Benutzereingabe 24 eines der Objekte 23 als ausgewählt festlegen. Um dem Benutzer optisch die Auswahl des aktuell ausgewählten Objekts 23' zu visualisieren, kann die Steuerschaltung 21 die Transparenz oder Opazität der Segmente 22 in Abhängigkeit von dem aktuell ausgewählten Objekt 23' einstellen.

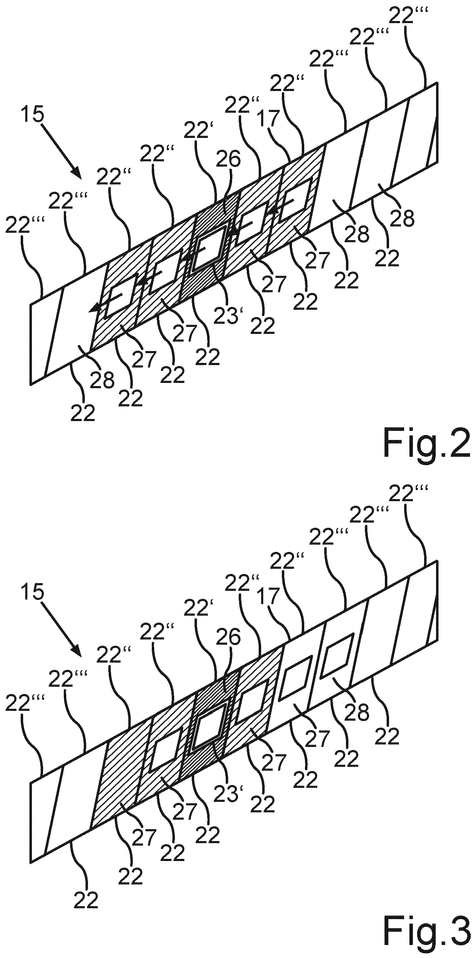

Fig. 2 zeigt hierzu die Veränderung des Anzeigeinhalts 15, wie er sich bei einer ersten Version des durch die Steuerschaltung 21 durchgeführten Betriebsverfahrens für die Anzeigevorrichtung 11 sich ergeben kann. Dasjenige Segment 22, welches sich hinter dem ausgewählten Objekt 23' befindet, kann als Auswahlsegment 22' mit der geringsten Transparenz betrieben werden, das heißt bei einem Minimalwert 26 der Transparenz. Benachbarte Segmente 22" können als Zwischensegmente mit einem jeweiligen Zwischenwert 27 für die Transparenz betrieben werden. Mögliche Zwischenwerte können beispielsweise sein: 80 Prozent Transparenz, 60 Prozent Transparenz. Die übrigen Segmente 22 können als Hintergrundsegmente 22‴ mit einem Maximalwert 28 der Transparenz betrieben werden. Je nach Technologie kann dies ein vollständig klares Segment sein oder ein Segment mit einer Lichtdurchlässigkeit von beispielsweise 50 Prozent oder mehr als 50 Prozent.

Wechselt die Auswahl des aktuell ausgewählten Objekts 23', so können, wie in Fig. 2 gezeigt, die angezeigten Objekte 23 nach Art eines Karussells im Anzeigeinhalt 15 durch Ansteuern der Pixelmatrix 16 verschoben werden, sodass bei unveränderter Position des Auswahlsegments 22' und der Zwischensegmente 22" das aktuell ausgewählte Objekt 23' vor oder über dem Auswahlsegment 22' positioniert oder angeordnet ist. Somit ändert sich für den Benutzer die Blickrichtung nicht, wenn er das aktuell ausgewählte Objekt 23' betrachten möchte.

Fig. 3 zeigt eine alternative Möglichkeit, bei welcher das aktuell ausgewählte Objekt 23' ortsfest auf der Pixelmatrix 16 beibehalten wird und das hinter dem ausgewählten Objekt 23 angeordnete Segment als Auswahlsegment 22' eingestellt oder betrieben wird. Entsprechend hierzu kann dann jedes benachbarte Segment als Zwischensegment 22" mit dem Zwischenwert 27 für die Transparenz betrieben werden.

Bevorzugt ist die Anzahl der einstellbaren Zwischenwerte bei den Segmenten 22 größer als 1, insbesondere größer als 2. Bevorzugt sind die Segmente 22 stufenlos zwischen Opak und Transparenz schaltbar ausgestaltet, was mit den besagten Technologien ermöglicht werden kann. Die Idee ist somit, mittels der schaltbaren Abschirmschicht die Menüauswahl zum Auswählen eines graphischen Objekts 23 aus mehreren graphischen Objekten zu ermöglichen. Die graphischen Objekte können beispielsweise als Menü auf einer graphischen Benutzeroberfläche (GUI - graphical user interface) derart positioniert werden, wobei die einzelnen dargestellten graphischen Objekte 23 mit jeweils einem Segment 22 korrespondieren. Wenn ein Objekt 23 beispielsweise als Menüelement ausgewählt ist, wird das dahinter liegende Segment 22 auf den Minimalwert der Transparenz oder den Maximalwert der Opazität (100 Prozent opak) geschaltet. Die daneben angeordneten Objekte in einem vorbestimmten Nahbereich können auf einen ersten Zwischenwert der Transparenz oder Opazität (beispielsweise 80 Prozent Opazität) geschaltet werden. Die daran angrenzenden, noch weiter vom ausgewählten Objekt angeordneten Segmente können auf einen größeren Grad der Transparenz / geringeren Wert der Opazität geschaltet werden, beispielsweise 60 Prozent Opazität. So kann stufenweise von 100 Prozent Opazität bis zu 0 Prozent Opazität (Maximalwert der Transparenz) stufenweise ein Übergang oder ein Überblenden geschaffen werden.

In der in Fig. 2 dargestellten Ausführungsform wird für den Fall, dass der Benutzer mit seiner Auswahl durch das Menü oder die Objekte wandert, das jeweils neu ausgewählte Objekt 23' in dem 100 Prozent opaken Segment dargestellt oder, wie in Fig. 3 dargestellt, das 100 Prozent opake Segment bewegt sich zu dem neu ausgewählten Objekt 23'.

Vorteil dieser Anzeigevorrichtung ist, dass segmentierte dunkle Folien in Kombination mit einer Projektionsfolie (transparente Pixelmatrix) bereitgestellt ist, bei welcher die Menü-Auswahl mit dem aktuell ausgewählten Objekt deutlich gemacht wird mittels eines Gradienten der Transparenz in der schaltbaren Abschirmschicht. So wird durch Einstellen dieser minimalen Transparenz hinter dem ausgewählten Objekt dieses am besten sichtbar durch den größten Kontrast dargestellt.

Hierbei kann man weiterhin durch die Anzeigevorrichtung, insbesondere die Pixelmatrix und die Abschirmschicht, hindurchschauen und den dahinter liegenden Freiraum sehen. So kann man beispielsweise auf die Umgebung des Kraftfahrzeugs achten und hat mehr Raumgefühl. Das Display kann aber auch beispielsweise auf einer Verkleidungsoberfläche 12', beispielsweise einer Furnierschicht aus Holz, angeordnet sein. Auch hierbei unterstützt die Opazität des Segments hinter dem ausgewählten Objekt und der stufenweise Übergang zu transparenten Segmenten eine Erkennbarkeit und visuelle Auffindbarkeit des aktuell ausgewählten Objekts. Die Auswahl kann beispielsweise mittels Touchscreen oder Touchpad erfolgen, indem mittels einer Wischbewegung die Auswahl von Objekten gewechselt wird.

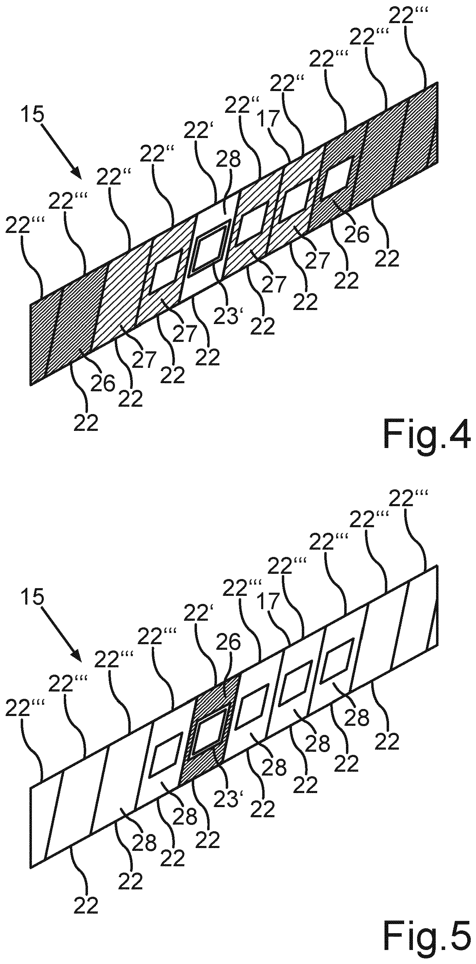

Fig. 4 zeigt einen Anzeigeinhalt der Anzeigevorrichtung, wie er sich ergeben kann, falls ein Hintergrund des ausgewählten Objekts transparent geschaltet wird, also das zumindest eine Auswahlsegment 22' mit dem Maximalwert 28 der Transparenz und das zumindest eine Hintergrundsegment 22‴ mit dem Minimalwert 26 der Transparenz betrieben wird. Es kann zumindest ein Zwischensegment 22" vorgesehen werden.

Fig. 5 zeigt einen Anzeigeinhalt der Anzeigevorrichtung, wie er sich ergeben kann, falls auf das zumindest eine Zwischensegment verzichtet wird und nur zumindest ein Auswahlsegment 22' hinter dem ausgewählten Objekt 23' und zumindest ein zu dem zumindest einen Auswahlsegment 22' komplementär geschaltetes Hintergrundsegment 22‴ vorgesehen wird. Dargestellt ist ein Beispiel, in welchem das Auswahlsegment 22' mit dem Minimalwert 26 der Transparent und Hintergrundsegmente 22‴ mit dem Maximalwert 28 der Transparenz betrieben werden.

Insgesamt zeigen die Beispiele, wie durch die Erfindung ein Auswahlmenü auf einem transparenten Display (Anzeigevorrichtung) mittels der schaltbaren Opazität einer schaltbaren Abschirmschicht unterstützt werden kann.

## Patentansprüche

1. Anzeigevorrichtung (11) mit einer von einem Hauptbetrachtungspunkt (13) aus entlang einer vorbestimmen Hauptbetrachtungsrichtung (14) durch einen Benutzer betrachtbaren Pixelmatrix (16), wobei die Pixelmatrix (16) transparent ausgestaltet ist und eine Steuerschaltung (21) dazu eingerichtet ist, mittels der Pixelmatrix (16) zumindest ein graphisches Objekt (23) anzuzeigen, und wobei entlang der Hauptbetrachtungsrichtung (14) gesehen hinter der Pixelmatrix (16) eine Abschirmschicht (17) mit individuell schaltbaren Segmenten (22) angeordnet ist und die Segmente (22) jeweils in Bezug auf ihre Transparenz zumindest zwischen einem Minimalwert (26) und einem Maximalwert (28) umschaltbar ausgestaltet sind, **dadurch gekennzeichnet, dass** die Steuerschaltung (21) dazu eingerichtet ist, eines aus dem zumindest einen angezeigten graphischen Objekt (23) in Abhängigkeit von einer Benutzereingabe (24) des Benutzers auszuwählen und entlang der Hauptbetrachtungsrichtung (14) gesehen zum Signalisieren, welches Objekt (23) aktuell ausgewählt ist,
- zumindest jedes hinter dem ausgewählten Objekt (23') angeordnete Segment (22) als jeweiliges Auswahlsegment (22') mit dem Minimalwert (26) oder mit dem Maximalwert (28) der Transparenz und
- zumindest eines der übrigen Segmente (22) als Hintergrundsegment (22‴) komplementär zu jedem Auswahlsegment (22') mit dem Maximalwert (28) oder mit dem Minimalwert (26) der Transparenz zu betreiben.

2. Anzeigevorrichtung (11) nach Anspruch 1, wobei zumindest einige oder alle der Segmente (22) jeweils in Bezug auf ihre Transparenz zusätzlich auch auf zumindest einen zwischen dem Minimalwert (26) und dem Maximalwert (28) liegenden Zwischenwert (27) umschaltbar ausgestaltet sind und die Steuerschaltung (21) dazu eingerichtet ist, zumindest ein zwischen dem zumindest einen Auswahlsegment (22') und dem zumindest einen Hintergrundsegment (22‴) angeordnetes Segment (22) als Zwischensegment (22") jeweils mit einem aus dem zumindest einen Zwischenwert (27) der Transparenz zu betreiben.

3. Anzeigevorrichtung (11) nach einem der vorhergehenden Ansprüche, wobei der Minimalwert (26), der zumindest eine Zwischenwert (27) und der Maximalwert (28) einer zunehmenden Transparenz entsprechen und ausgehend von dem zumindest einen hinter dem ausgewählten Objekt (23') angeordneten Auswahlsegment (22') eine Transparenz der Segmente (22) in zumindest zwei Stufen stufenweise zunimmt.

4. Anzeigevorrichtung (11) nach einem der vorhergehenden Ansprüche, wobei die Steuerschaltung (21) dazu eingerichtet ist, mehrere Zwischensegmente (22") mit unterschiedlichen Transparenzwerten zu betreiben.

5. Anzeigevorrichtung (11) nach einem der vorhergehenden Ansprüche, wobei die Steuerschaltung (21) dazu eingerichtet ist, jedes der Segmente (22) als Hintergrundsegment (22‴) zu betreiben, für den Fall, dass ein ausgewähltes graphisches Objekt (23') fehlt.

6. Anzeigevorrichtung (11) nach einem der vorhergehenden Ansprüche, wobei die Steuerschaltung (21) dazu eingerichtet ist, mehrere graphische Objekte (23) anzuzeigen und während der Benutzereingabe (24) das ausgewählte Objekt (23') zu wechseln und hierbei auf der Pixelmatrix (16) die Objekte (23) ortsfest anzuzeigen und die Transparenz der Segmente (22) der Abschirmschicht (17) in Abhängigkeit von einer jeweiligen aktuellen Position des ausgewählten Objekts (23') einzustellen.

7. Anzeigevorrichtung (11) nach Anspruch 2 oder nach Anspruch 2 und einem der Ansprüche 3-6, wobei die Steuerschaltung (21) dazu eingerichtet ist, mehrere graphische Objekte (23) anzuzeigen und während der Benutzereingabe (24) das ausgewählte Objekt (23') zu wechseln und hierbei das zumindest eine Auswahlsegment (22'), das zumindest eine Zwischensegment (22") und das zumindest eine Hintergrundsegment (22‴) unverändert zu betreiben und auf der Pixelmatrix (16) das jeweils aktuell ausgewählte Objekt (23') vor dem zumindest einen Auswahlsegment (22') anzuzeigen.

8. Anzeigevorrichtung (11) nach einem der vorhergehenden Ansprüche, wobei eine jeweilige Flächengröße der Segmente (22) jeweils einer Gesamtfläche eines einzelnen oder mehrerer Pixel der Pixelmatrix (16) entspricht, insbesondere pro Objekt (23) nur ein Segment (22) vorgesehen ist.

9. Anzeigevorrichtung (11) nach einem der vorhergehenden Ansprüche, wobei die Segmente (22) zu einem jeweiligen Zeitpunkt monochrom sind.

10. Kraftfahrzeug (10) mit einer Anzeigevorrichtung (11) nach einer der vorhergehenden Ansprüche, wobei entlang einer durch die Anzeigevorrichtung (11) sich ergebenden Hauptbetrachtungsrichtung (14) hinter der Anzeigevorrichtung (11) ein Freiraum (19) oder eine Verkleidungsoberfläche (12' ) bereitgestellt ist.

11. Verfahren zum Betreiben einer Anzeigevorrichtung (11), wobei eine Steuerschaltung (21) mittels einer transparenten Pixelmatrix (16) zumindest ein graphisches Objekt (23) anzeigt und entlang einer Hauptbetrachtungsrichtung (14) gesehen hinter der Pixelmatrix (16) eine Abschirmschicht (17) mit individuell schaltbaren Segmenten (22) betreibt, wobei die Segmente (22) jeweils in Bezug auf ihre Transparenz zwischen einem Minimalwert (26), einem Maximalwert (28) und zumindest einem Zwischenwert (27) umschaltbar ausgestaltet sind, **dadurch gekennzeichnet, dass** die Steuerschaltung (21) eines aus dem zumindest einen angezeigten graphischen Objekt (23) in Abhängigkeit von einer Benutzereingabe (24) eines Benutzers auswählt und entlang der Hauptbetrachtungsrichtung (14) gesehen jedes hinter dem ausgewählten Objekt (23') angeordnete Segment (22) als jeweiliges Auswahlsegment (22') mit dem Minimalwert (26) und zumindest eines der Segmente (22) als Hintergrundsegment (22‴) mit dem Maximalwert (28) und zumindest ein zwischen dem zumindest einen Auswahlsegment (22') und dem zumindest einen Hintergrundsegment (22‴) angeordnetes Segment (22) als Zwischensegment (22") jeweils mit einem aus dem zumindest einen Zwischenwert (27) betreibt.

## Claims

1. A display device (11) with a pixel matrix (16) viewable by a user from a principal viewing point (13) along a predetermined principal viewing direction (14), wherein the pixel matrix (16) is transparently configured, and a control circuit (21) is configured to display at least one graphic object (23) by means of the pixel matrix (16), and wherein a shielding layer (17) with individually switchable segments (22) is arranged behind the pixel matrix (16) viewed along the principal viewing direction (14) and the segments (22) are each configured switchable with respect to their transparency at least between a minimum value (26) and a maximum value (28), **characterized in that** the control circuit (21) is configured to select one from the at least one displayed graphic object (23) depending on a user input (24) of the user, and for signaling, which object (23) is currently selected, viewed along the principal viewing direction (14), to operate
- at least each segment (22) arranged behind the selected object (23') as a respective selection segment (22') with the minimum value (26) or with the maximum value (28) of the transparency, and
- at least one of the remaining segments (22) as a background segment (22‴) in complementary manner to each selection segment (22') with the maximum value (28) or with the minimum value (26) of the transparency.

2. The display device (11) according to claim 1, wherein at least some or all of the segments (22) are each additionally also configured switchable with respect to their transparency to at least one intermediate value (27) between the minimum value (26) and the maximum value (28), and the control circuit (21) is configured to operate at least one segment (22) arranged between the at least one selection segment (22') and the at least one background segment (22‴) as an intermediate segment (22") respectively with one of the at least one intermediate value (27) of the transparency.

3. The display device (11) according to any one of the preceding claims,
wherein the minimum value (26), the at least one intermediate value (27) and the maximum value (28) correspond to an increasing transparency and a transparency of the segments (22) gradually increases in at least two steps starting from the at least one selection segment (22') arranged behind the selected object (23').

4. The display device (11) according to any one of the preceding claims,
wherein the control circuit (21) is configured to operate multiple intermediate segments (22") with different transparency values.

5. The display device (11) according to any one of the preceding claims,
wherein the control circuit (21) is configured to operate each of the segments (22) as a background segment (22‴) in case that a selected graphic object (23') is absent.

6. The display device (11) according to any one of the preceding claims,
wherein the control circuit (21) is configured to display multiple graphic objects (23) and to change the selected object (23') during the user input (24) and herein to stationarily display the objects (23) on the pixel matrix (16) and to adjust the transparency of the segments (22) of the shielding layer (17) depending on a respective current position of the selected object (23').

7. The display device (11) according to claim 2 or according to claim 2 and any one of claims 3-6, wherein the control circuit (21) is configured to display multiple graphic objects (23) and to change the selected object (23') during the user input (24) and herein to operate the at least one selection segment (22'), the at least one intermediate segment (22") and the at least one background segment (22‴) in unchanged manner and to display the respectively currently selected object (23') in front of the at least one selection segment (22') on the pixel matrix (16).

8. The display device (11) according to any one of the preceding claims,
wherein respective area size of the segments (22) each corresponds to a total area of an individual or multiple pixels of the pixel matrix (16), in particular only one segment (22) is provided per object (23).

9. The display device (11) according to any one of the preceding claims,
wherein the segments (22) are monochromatic at a respective point of time.

10. A motor vehicle (10) with a display device (11) according to any one of the preceding claims, wherein a clearance (19) or a lining surface (12') is provided behind the display device (11) along a principal viewing direction (14) arising by the display device (11).

11. A method for operating a display device (11), wherein a control circuit (21) displays at least one graphic object (23) by means of a transparent pixel matrix (16) and operates a shielding layer (17) with individually switchable segments (22) behind the pixel matrix (16) viewed along a principal viewing direction (14), wherein the segments (22) are each configured switchable with respect to their transparency between a minimum value (26), a maximum value (28) and at least one intermediate value (27), **characterized in that** the control circuit (21) selects one from the at least one displayed graphic object (23) depending on a user input (24) of a user and operates each segment (22) arranged behind the selected object (23') viewed along the principal viewing direction (14) as a respective selection segment (22') with the minimum value (26) and at least one of the segments (22) as a background segment (22‴) with the maximum value (28) and at least one segment (22) arranged between the at least one selection segment (22') and the at least one background segment (22‴) as an intermediate segment (22") respectively with one from the at least one intermediate value (27).

## Revendications

1. Dispositif d'affichage (11) comportant une matrice de pixels (16) visible par un utilisateur depuis un point d'observation principal (13) le long d'une direction d'observation principale (14) prédéterminée, la matrice de pixels (16) étant formée de manière transparente et un circuit de commande (21) étant configuré pour afficher au moins un objet graphique (23) au moyen de la matrice de pixels (16), et une couche d'écran (17) avec des segments individuellement commutables (22) étant agencée derrière la matrice de pixels lorsque vue le long de la direction d'observation principale (14), et les segments (22) étant respectivement agencés de manière commutable en ce qui concerne leur transparence au moins entre une valeur minimale (26) et une valeur maximale (28), **caractérisé en ce que** le circuit de commande (21) est configuré pour sélectionner le au moins un objet graphique affiché (23) en fonction d'une entrée d'utilisateur (24) de l'utilisateur et signaler que l'objet (23) est actuellement sélectionné lorsque vu le long de la direction d'observation principale,
- en faisant fonctionner au moins chaque segment (22) agencé derrière l'objet sélectionné (23') comme un segment de sélection (22') respectif avec la valeur minimale (26) ou la valeur maximale (28) de transparence et
- en faisant fonctionner au moins un des segments (22) restants comme un segment d'arrière-plan (22"') de façon complémentaire à chaque segment de sélection (22') avec la valeur maximale (28) ou la valeur minimale (26) de transparence.

2. Dispositif d'affichage (11) selon la revendication 1, dans lequel au moins une partie ou la totalité des segments (22) sont respectivement formés de manière à pouvoir être également commutés, en ce qui concerne leur transparence, en plus sur au moins une valeur intermédiaire (27) située entre la valeur minimale (26) et la valeur maximale (28) et le circuit de commande (21) est configuré pour faire fonctionner au moins un segment agencé entre le au moins un segment de sélection (22') et le au moins un segment d'arrière-plan (22"') comme un segment intermédiaire (22") respectivement avec la au moins une valeur intermédiaire (27) de transparence.

3. Dispositif d'affichage (11) selon l'une des revendications précédentes,
dans lequel la valeur minimale (26), la au moins une valeur intermédiaire (27) et la valeur maximale (28) correspondent à une transparence croissante, et à partir du au moins un segment de sélection (22') agencé derrière l'objet sélectionné (23'), une transparence des segments (22) augmente progressivement en au moins deux étapes.

4. Dispositif d'affichage (11) selon l'une des revendications précédentes, dans lequel le circuit de commande (21) est configuré pour faire fonctionner plusieurs segments intermédiaires (22") avec différentes valeurs de transparence.

5. Dispositif d'affichage (11) selon l'une des revendications précédentes, dans lequel le circuit de commande (21) est configuré pour faire fonctionner chacun des segments (22) comme un segment d'arrière-plan (22"'), dans le cas où il manque un objet graphique sélectionné (23').

6. Dispositif d'affichage (11) selon l'une des revendications précédentes, dans lequel le circuit de commande (21) est configuré pour afficher plusieurs objets graphiques (23) et changer l'objet sélectionné (23') pendant l'entrée d'utilisateur (23) et afficher ainsi les objets (23) sur la matrice de pixels (16) de manière fixe dans l'espace et régler la transparence des segments (22) de la couche d'écran (17) en fonction d'une position actuelle respective de l'objet sélectionné (23').

7. Dispositif d'affichage (11) selon la revendication 2 ou selon la revendication 2 et l'une des revendications 3 à 6,
dans lequel le circuit de commande (21) est configuré pour afficher plusieurs objets graphiques (23) et changer l'objet sélectionné (23') pendant l'entrée d'utilisateur (24) et faire ainsi fonctionner le au moins un segment de sélection (22') de manière inchangée, le au moins un segment intermédiaire (22") et le au moins un segment d'arrière-plan (22"'), et afficher sur la matrice de pixels (16) l'objet (23') respectivement actuellement sélectionné devant le au moins un segment de sélection (22').

8. Dispositif d'affichage (11) selon l'une des revendications précédentes,
dans lequel une aire de surface respective des segments (22) correspond respectivement à une surface totale d'un seul ou plusieurs pixels de la matrice de pixels (16), un seul segment (22) étant en particulier prévu par objet (23).

9. Dispositif d'affichage (11) selon l'une des revendications précédentes,
dans lequel les segments (22) sont monochromes à un instant respectif.

10. Véhicule à moteur (10) comportant un dispositif d'affichage (11) selon l'une des revendications précédentes, dans lequel un espace libre (19) ou une surface de garniture (12') est fournie derrière le dispositif d'affichage (11), le long d'une direction d'observation principale (14) résultante à travers le dispositif d'affichage (11).

11. Procédé pour faire fonctionner un dispositif d'affichage (11), dans lequel un circuit de commande (21) affiche au moins un objet graphique (23) au moyen d'une matrice de pixels (16) transparente et fait fonctionner une couche d'écran (17) avec des segments individuellement commutables (22) derrière la matrice de pixels (16) lorsque vue le long d'une direction d'observation principale (14), les segments (22) étant respectivement formés de manière commutable en ce qui concerne leur transparence entre une valeur minimale (26), une valeur maximale (28) et au moins une valeur intermédiaire (27), **caractérisé en ce que** le circuit de commande (21) choisit le au moins un objet graphique affiché (23) en fonction d'une entrée d'utilisateur (24) d'un utilisateur et chaque segment (22) agencé derrière l'objet sélectionné (23') lorsque vu le long de la direction d'observation principale (14) fonctionne respectivement comme un segment de sélection (22') respectif avec la valeur minimale (26) et au moins un des segments (22) fonctionne comme un segment d'arrière-plan (22"') avec la valeur maximale (28), et au moins un segment (22) agencé au moins entre le au moins un segment de sélection (22') et le au moins un segment d'arrière-plan (22"') fonctionne respectivement comme un segment intermédiaire (22") avec la au moins une valeur intermédiaire (27).
